# EUROPEAN PATENT SPECIFICATION

(11) **EP 3 314 335 B1**
(45) Date of publication and mention of the grant of the patent: **02.10.2019**
(21) Application number: 15731942.7
(22) Date of filing: 26.06.2015
(51) Int. Cl.: G03H 1/00, G03H 1/02, G03H 1/18, G03H 1/26, B42D 25/328

(54) **SECURITY ELEMENT WITH PATTERN AND DOUBLE-SIDED HOLOGRAPHIC EFFECT**
SICHERHEITSELEMENT MIT MUSTER UND DOPPELSEITIGEM HOLOGRAFISCHEN EFFEKT
ÉLÉMENT DE SÉCURITÉ AYANT UN MOTIF ET UN EFFET HOLOGRAPHIQUE À DOUBLE FACE

(43) Date of publication of application: 02.05.2018
(73) Proprietor: Fedrigoni S.p.A., 37135 Verona (IT)
(72) Inventor: BALLABIO, Eligio, I-55044 Pietrasanta (LU) (IT); BELLI, Alberto, I-20134 Milano (IT); PALLOTTA, Pasquale, I-60044 Fabriano (AN) (IT)
(74) Representative: TBK
(86) International application number: PCT/EP2015/064561
(87) International publication number: WO 2016/206760

(56) References cited:
- US-A- 5 411 296
- US-A1- 2005 127 663
- US-A1- 2007 206 249
- US-A1- 2008 310 025
- US-A1- 2011 115 212

## Description

The invention relates to a method of manufacturing a security element which can have the form of threads, strips or patches and which is used in connection with banknotes, official and unofficial documents like passports, ID-cards, bank and credit cards, checks, paper, coupons vouchers, tickets, packages or the like. Provision of the mentioned documents with the security element improves the protection against forgery.

Security elements typically have different characteristics or so-called security features which may be recognized by visual inspection, such as colour changes, holographic pictures, characters, patterns, which may particularly develop a different appearance according to the angle and direction of the observation with the naked eye. This allows a quick and reliable detection of forgery without requiring any equipment. Therefore, observable effects shall be made prominent in occurrence, so that a missing optical effect is quickly recognized to quickly identify a forgery. Of course, the security element shall be very difficult -if not impossible- to copy, to reduce the potential of forgery.

In particular, the formation of patterns which are visible in transferred light by providing gaps in a metal layer on a transparent substrate is a readily recognizable security feature and are well-known in the art.

It is also known to provide holographic effects on one surface of a security element by covering a suitably structured or modulated surface with a reflective layer, which provide the holographic effect such as changing pictures and/or colors and/or 3D-pictures and the like depending on the direction of observation.

Security elements using holograms and diffractive layers are e.g. known from US 2007/206249 A1, US 5 411 296 A, US 2005/127663 A1, US 2008/0310025 A1 and in particular US 2011/0115212 A1.

It is considered an improvement of the safety of the security element if a holographic effect observable in reflected light and a pattern observable in transmitted light are combined. In this case, it may be arranged that the pattern will be observable from both sides of the security element, while the holographic effect is only visible from one side.

In view of the above, it is the object of the invention to provide a method of manufacturing a security element which has an improved safety in visual inspection.

With regard to the method, the object is solved with a method according to claim 1.

A security element, comprises a transparent first layer having a holographic surface structure, a first metal layer arranged on said first layer in a first pattern having transparent and non-transparent regions and a holographic surface structure, a second layer having a second holographic surface structure, and a second metal layer arranged on said second layer in a second pattern having transparent and non-transparent regions and a holographic surface structure, wherein said transparent regions of said first metal layer and said second metal layer are arranged to at least partly overlap each other.

With this arrangement, visual inspection of the security element in transmitted light will disclose the overlapping portions of the transparent regions in the first and second metal layer as a pattern. Visual inspection of the security element in reflected light will show a holographic effect on each of the two sides of the security element , i.e. front surface/rear surface.

Advantageously, the transparent and non-transparent regions of the first layer and the second layer are in register, so that the security element displays a pattern on one side and the mirrored pattern on the other side, when inspected in transmitted light

Advantageously, the holographic surface structure of the first metal layer is different from the holographic surface structure of the second metal layer, so that the security element displays a first holographic effect, when inspected from one side in reflected light, and displays a second holographic effect which is different from the first holographic effect, when inspected from the other side in reflected light.

Advantageously, the non-transparent regions of the first metal layer have a holographic surface structure which repeats the holographic surface structure of the first layer underneath the non-transparent regions at least on the surface of the first metal layer adjacent to the first layer. Additionally or alternatively, the non-transparent regions of the second metal layer have a holographic surface structure which repeats the holographic surface structure of the second layer underneath the non-transparent regions at least on the surface of the second metal layer which is opposite to the second layer.

Advantageously, the security element comprises a transparent film on which said first layer is formed. Preferably, this layer is made from a PET (polyethylene terephtalate) film which has a high transparency and which is stable in shape and is sturdy.

Preferably, the second layer is made from an embossable photopolymer material which becomes soluble when radiated with light and/or radiation. In this way, the material can be selectively, i.e. at selected portions of the layer, changed in its composition by irradiating these portions with light, preferably UV-light, or X-ray or other types of radiation, such that the material can be dissolved or washed away from these selected portions.

Advantageously, the security element has a third layer covering the second metal layer at the non-transparent regions. This third layer may be printed in a manner to cover the non-transparent portions of the second metal layer. The third layer is resistant against metal dissolving/removing liquids (etching liquids) and is capable to protect the metal layer underneath against such etching liquids. In the later description of the method for manufacturing the security element, the third layer is defined as being made of a coating, i.e. it may comprise any suitable coating material such as lacquer, ink, varnish, resist, or other solidifying spreadable materials.

Advantageously, a protection layer covering the exposed outermost surface portions of each layer is provided. The protection layer is suitably selected to be resistant against e.g. mechanical wear, radiation, chemical substances which may expectably come into contact with the security element and the like.

The method for manufacturing a security element, according to the invention comprises steps of: forming a first layer from a transparent material, forming a holographic surface structure on the first layer, metallization of the first layer to form a first metal layer, forming a second layer from a radiation-sensitive polymer on the first metal layer, forming a holographic surface structure on the second layer, metallization of the second layer to form the second metal layer, printing a pattern of a coating on the second metal layer, said pattern comprising regions covered by the coating and regions uncovered by the coating, removal of the metal in regions of the second metal layer which are uncovered by the coating by a process of de-metallization, exposing the de-metallized regions of the second layer to light or radiation, so as to transfer the radiation-sensitive polymer in the de-metallized regions into a soluble state and removing the soluble radiation-sensitive polymer, and removal of the metal in regions of the first metal layer, which are not covered by the second layer, by a process of de-metallization.

Advantageously the materials used for the first layer and for the second layer are embossable materials, and wherein first and the second holographic surface structures are made by embossing the respective layer. The formation of the holographic surface structure and the metallization of the first and/or second structure can be made in arbitrary order on each layer and amongst the layers. Advantageously, the first layer is printed on a transparent film, the radiation-sensitive polymer is printed on the first metal layer, and the coating is a resist, which is printed in a predetermined pattern on the second metal layer. Advantageously, the radiation is UV-light which is applied to the security element after the de-metallization step of the second metal layer. Preferably, the radiation-sensitive polymer of the second layer is destabilized by UV-light and the destabilized polymer is soluble in an aqueous soda solution.

Advantageously a protective layer is applied to cover the security element, the protective layer being applied to cover the exposed surfaces of the layers and to fill gaps formed in the layers, particularly the gaps formed by the transparent regions of the patterns. In this way, the surface of the security element becomes smooth, so that intrusion of liquids or debris is avoided and resistance to mechanical wear at the edges of the gaps is inhibited. This ensures a clear appearance of the security features of the security element over long time. Advantageously the protective layer is provided with an adhesive, particularly a thermo adhesive. In this way, application of the security element to a carrier (banknote or the like) is possible by the application of heat and pressure. In this case, the side of the security element covered by the protective layer is fixed to the carrier, so that the exposed surface of the security element is the transparent film which may be made of PET, a robust material.

Advantageously, the security element is a security thread which is embedded into paper to run over the surface of the protected document such as a banknote. The security element may also have the form of patches or other shapes which may be applied to or implemented in documents to be secured against forgery.

In the following, the invention will be explained in detail by reference being made to a preferred embodiment as is shown in the drawings, in which
Fig. 1 is an schematic enlarged sectional view of a portion of a security element related to an embodiment of the invention, and
Fig. 2 to Fig. 6 schematically show the development of a security element by intermediate products during manufacturing of the preferred embodiment, wherein

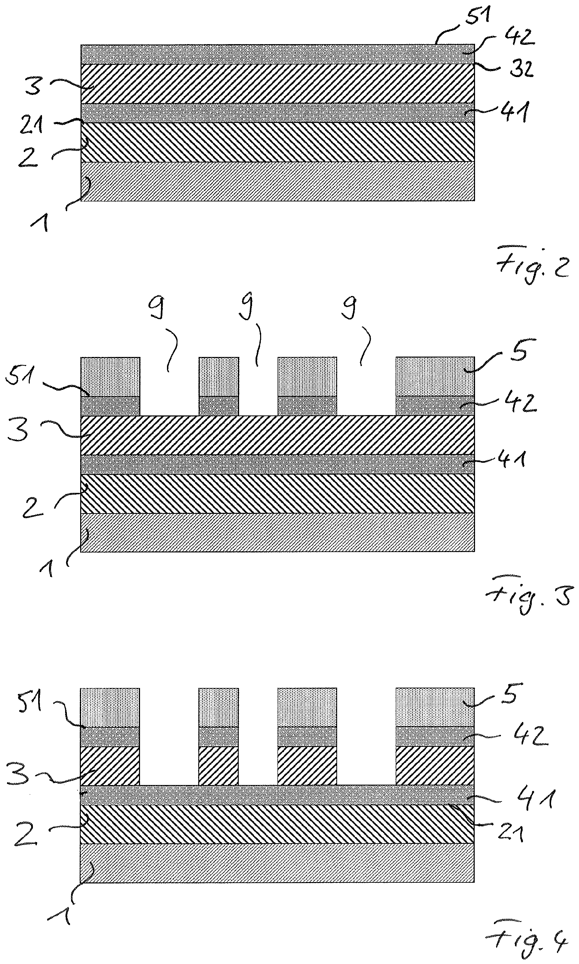

Fig.2 starts out from an intermediate product which is obtained by printing, embossing and metallization steps;
Fig. 3 shows the formation of the pattern of transparent portions in a metal layer;
Fig. 4 shows the formation of the pattern in register with the transparent portions within a layer of a radiation-sensitive polymer;

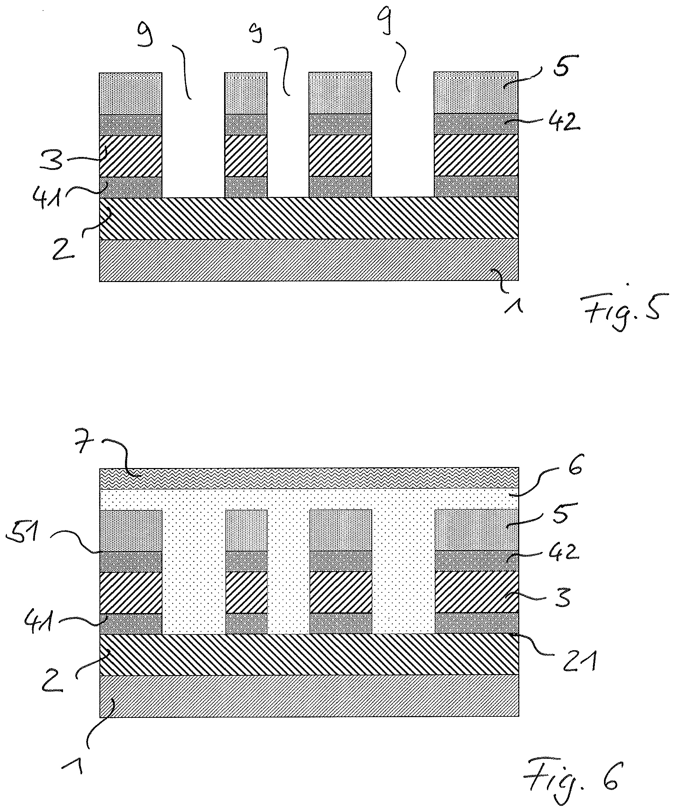

Fig. 5 shows the formation of a pattern of transparent portions in another metal layer in register with the pattern in the radiation sensitive polymer; and
Fig.6 shows a schematic sectional view of the final security element produced according to a method of the invention.

In the description of the drawings, the terms upper and lower, above, underneath etc. are used in relation to the drawings as shown. These term are not limiting, because an opposite orientation of the security element during manufacturing and use is possible and likely, so that these terms will have to be adapted accordingly. Also, term like first, second and third or the like are derived from the order of manufacturing, and are not limiting the scope of the claims, when counting the order of layers in the final product.

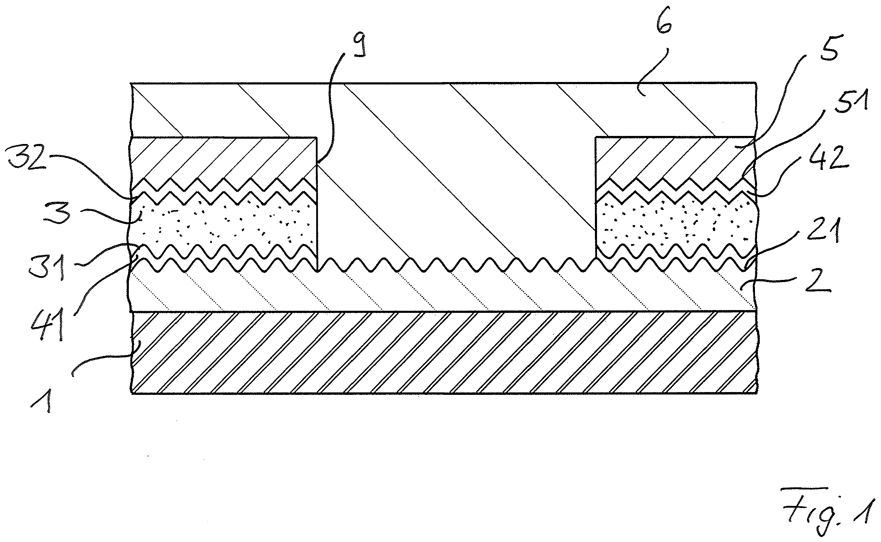

Fig. 1 is an schematic enlarged sectional view of a portion of a security element related to an embodiment of the invention. It is noted that the size relations of the individual elements are drawn arbitrarily for explanation prupose and do not correspond to the natural size relations.

A transparent film 1 made preferably from PET carries a first transparent layer 2. A surface structure 21 which is formed on the upper surface of the first transparent layer 2 is embossed into the material of the layer. The surface structure is suited to form a holographic picture or effect. In the drawing of Fig. 1 line 21 is used to express an irregular or rough surface structure 21 which in practice has much smaller amplitudes than is shown here. Above the first transparent layer 2 there are portions of a first metal layer 41, wherein the metal layer 41 follows the surface structure 21 of the first transparent layer 2. That is, since the metal layer 41 is thin and has an almost constant thickness, it repeats the surface structure 21 accurately.

On the portions of the metal layer 41, a second layer 3 is formed which has one side repeating the surface structure 21 in the form of a surface structure 31. On the other side, which side is opposite to the surface structure 31, a second surface structure 32 is formed, which also provides for a holographic effect in the form of a picture or the like. In order to indicate that the surface structure 32 is different from the surface structure 21, a zigzag line has been used. Also here, line 32 is used to express an irregular or rough surface structure 32 which in practice has much smaller amplitudes than is shown here.

A second metal layer 42 is formed to cover the surface structure 32 of the second layer 3. Because the metal layer 42 is very thin, the upper side of the metal layer 42 shows a surface structure 51 which is the same as the surface structure 32, i.e. it provides the same holographic effect as surface structure 32. The second metal layer 42 is covered with a third layer 5 which is made from a coating material. Finally, a transparent protection layer 6 is applied which covers all exposed surfaces of the individual layers also those parts which are exposed to the gaps 9 between the layered blocks.

The gaps 9 between the layered blocks form or are arranged in a pattern which is observable in transmitted light. In particular, film 1, transparent layer 2 and protection layer 6 are transparent, so that the gaps 9 forming a pattern in an opaque security element are clearly recognizable and form a first safety feature of the security element.

Furthermore, the holographic structure 21 of the first transparent layer 2 is backed by a metal layer (typically aluminum) so that an observation of the security element from below in Fig 1 discloses a first hologram picture. Due to the mirror effect of the metal backing of the surface structure 21, the holographic effect will be bright and clear. The portion of the surface structure 21 of the first transparent layer 2 which is backed by the protection layer 6 in the gap 9 has a weak holographic effect.

When the security element of Fig. 1 is observed from above in Fig. 1 then the surface structure 51 reflects the light through the transparent coating 5 and, thus, discloses a holographic picture which is bright and clear. The holographic picture of the surface structure 51 may be different than that of the surface structure 21 or these pictures may be the same. Similar to the observation from below, the holographic effect of the surface structure 21 in gap 9 is weak.

The portions covered by the first and second metal layers 41 and 42 are non-transparent, so that each respective holographic picture can only be seen from one side of the security element because, the other holographic picture is hidden or shielded by the corresponding metal layer. For example the first metal layer 41 shields the holographic surface structure 51, so that it cannot be observed from below in Fig. 1; similarly the second metal layer 42 shields the holographic structure 21, so that it cannot be observed from above in Fig 1.

When observing the security element of Fig. 1 from above in transmitted light, which comes from below in Fig. 1, the pattern formed by the gaps 9 will be clearly recognized.

In the embodiment shown in Fig. 1, the gap 9 is formed to pass through both metal layers so that their transparent and non-transparent portions are in register with each other. It is, however, also possible to provide these gap only in partial overlap to each other.

In the following, using Figs. 2 to 6, a method for producing the security element of Fig. 1 is explained. It is noted that Fig. 2 to 6 are schematic in that they are used to explain the order of forming layers and gaps, but they fail to show the holographic surface structures at all. Therefore, it is to be born in mind that the metal layers in that description have the holographic surface structure as is explained under reference to Fig. 1. In particular, the effect that the metal layer is thin enough to copy or repeat the surface structure underneath itself is not shown here, the metal layers are only shown with regard to their position in the layered structure.

Besides, the same reference signs are used for the same elements as described in Fig.1, so that the related description applies mutatis mutandis here.

According to Fig. 2, the process initially provides a layered security element which has a transparent film 1, on which a first transparent layer 2 is provided by printing or the like. The first transparent layer 21 has an embossed upper surface in which a surface structure 21 is formed by embossing the first transparent layer material. The embossed structure is arranged to show a holographic effect.

Then a thin first metal layer 41 is applied which covers the first transparent layer 2 with the surface structure 21. The metal layer 41 is applied by a metallization process, wherein one possible process uses evaporation of metal, like aluminum.

The first metal layer 41 is covered with a second layer 3 which is made from a photo-sensitive polymer material. The second layer 3 may be applied by printing or other suitable coating process. When the photo-sensitive material is irradiated with UV-light, it changes its composition such that the irradiated material portions become soluble to a solvent, which may be water or another technical solvent like a mild water/soda solution. The second layer 3 is embossed to form a surface structure 32 thereon as is described in detail with reference to Fig. 1. This surface structure 32 is arranged to show a holographic effect.

A second metal layer 42 is formed on the second layer 3. The metal layer 42 is very thin so that the upper surface of the metal layer repeats or copies the surface structure 32 underneath the second metal layer 42. As a result, the upper surface of the second metal layer 42 has a surface structure 51 which provides or has a holographic effect.

A transparent third layer 5 or coating is then applied on the top surface of the second metal layer 42 (this step not being shown in a separate figure). The application of the third transparent layer 5 is made to form a pattern of coated and uncoated regions on the second metal layer 42. The application in the form of a pattern is obtained by printing a transparent coating or a transparent resist in a required pattern, which pattern may comprise text, letters, symbols, signs, numbers or other shapes and the like.

As can be seen from Fig. 3, in a washing or etching step, those portions of the second metal layer 42 which are not covered by the third transparent layer 5, are dissolved and removed to form a pattern of gaps in the required shape. The regions of the second metal layer 42 which are covered by the third transparent layer 5 are shielded and are unaffected by the washing or etching liquid and remain unchanged.

Then, the structure of Fig. 3 is irradiated with UV-light from above in Fig. 3. The photo-sensitive polymer of the second layer 3 dissolves where it has been irradiated with the UV-light. That means that the polymer which has been irradiated can be washed away using a suitable solvent (a water/soda solution as solvent), while the portions which were not subject to the irradiation with UV-light are unaffected and remain unchanged. Because the non-transparent portions of the second metal layer 42 shield the photo-sensitive polymer material underneath themselves, the UV-light does not reach these portions and the polymer remains unchanged. In this way, the gaps so formed in the second layer 3 are in register with the gaps formed in the second metal layer 42, which gaps are in conformity (register) with the gaps formed in the pattern printed as the third transparent layer 5. The result after the irradiating step and the removal of the polymer material to form the gaps in the pattern is shown in Fig.4.

Starting with the intermediate product of Fig. 4, again an etching or washing step is performed which removes those portions of the first metal layer 41 which are not covered by the second layer 3, i.e. where the second layer 3 has been removed in the foregoing process step. The portions which are covered by the second layer 3 are shielded against the washing or etching liquid, and therefore remain unaffected by that process. The result of this etching or washing step is shown in Fig. 5.

From Fig. 5 one can clearly see that the de-metallized regions or portions of the first metal layer 41, where the metal has been removed, are in conformity or register with the gaps formed in the superimposed layers in the foregoing process steps. As a result, when the pattern is observed in transmitted light from either side of the security element a clear and bright pattern can be recognized. In the final steps, a transparent protection layer 6 is applied which fills the gaps and forms a cover to seal the layered structure of the security element. This may be obtained by printing a protection lacquer on the security element.

Finally, a thermo-adhesive 7 is applied which is used for fixing the security to the document, banknote or the like which is to be protected. The final result is shown in Fig. 6.

It is noted that the second layer 3 may be formed of an embossable photo-sensitive material which is opaque or non-transparent. Furthermore, in the method and product described above, the holographic surface structure of the first layer 2 and/or the second layer 3 may be made before or after the surface has been metallized, i.e. provided with the respective metal layer 41 and 42, respectively. Using the embossing technology allows to suitably deform (emboss) the surface of the respective layer independent from whether the layer carries the metal layer or not.

## Claims

1. A method for manufacturing a security element, the method comprising the steps of:
forming a first layer (2) from a transparent material,
forming a holographic surface structure (21) on the first layer (2),
metallization of the first layer (2) to form a first metal layer (41),
forming a second layer (3) from a radiation-sensitive polymer on the first metal layer,
forming a holographic surface structure (32) on the second layer (3),
metallization of the second layer (3) to form the second metal layer (42),
forming a pattern of a coating (5) on the second metal layer (42), said pattern comprising regions covered by the coating (5) and regions uncovered by the coating (5),
removal of the metal in regions of the second metal layer (42) which are uncovered by the coating (5) by a process of de-metallization,
exposing the de-metallized regions of the second layer (3) to light or radiation, so as to transfer the radiation-sensitive polymer in the de-metallized regions into a soluble state and removing the soluble radiation-sensitive polymer,
removal of the metal in regions of the first metal layer (41), which are not covered by the second layer (3), by a process of de-metallization.

2. A method according to claim 1, wherein the materials used for the first layer (2) and for the second layer (3) are embossable materials, and wherein first (21) and the second holographic surface structures (32) are made by embossing the respective layer (2, 3).

3. A method according to claim 1 or 2, wherein the first layer (2) is printed on a transparent film (1), the radiation-sensitive polymer is printed on the first metal layer (41), and the coating (5) is a resist, which is printed in a predetermined pattern on the second metal layer (42).

4. A method according to any one of the foregoing claims 1 to 3, wherein the radiation is UV-light which is applied to the security element after the de-metallization step of the second metal layer (42).

5. A method according to any one of the foregoing claims 1 to 4, wherein the radiation-sensitive polymer is destabilized by UV-light and the destabilized polymer is soluble in an aqueous soda solution.

6. A method according to any one of the foregoing claims 1 to 5, wherein a protective layer (6) is applied to cover the security element, the protective layer (6) being applied to cover the exposed surfaces of the layers (2, 5) and to fill gaps (9) formed in the layers (2, 3, 41, 42, 5), particularly the gaps (9) formed by the transparent regions of the patterns.

7. A method according to any one of the foregoing claims 1 to 6, wherein the protective layer (6) is provided with an adhesive, particularly a thermo-adhesive.

## Patentansprüche

1. Verfahren zur Herstellung eines Sicherheitselements, wobei das Verfahren die folgenden Schritte aufweist:
Bilden einer ersten Schicht (2) aus einem transparenten Material,
Bilden einer holographischen Oberflächenstruktur (21) auf der ersten Schicht (2),
Metallisieren der ersten Schicht (2), um eine erste Metallschicht (41) zu bilden,
Bilden einer zweiten Schicht (3) aus einem strahlungsempfindlichen Polymer auf der ersten Metallschicht,
Bilden einer holographischen Oberflächenstruktur (32) auf der zweiten Schicht (3),
Metallisieren der zweiten Schicht (3), um die zweite Metallschicht (42) zu bilden,
Bilden eines Musters einer Beschichtung (5) auf der zweiten Metallschicht (42), wobei das Muster Bereiche hat, die durch die Beschichtung (5) bedeckt sind und Bereiche hat, die durch die Beschichtung (5) nicht bedeckt sind,
Entfernen des Metalls in Bereichen der zweiten Metallschicht (42), die durch die Beschichtung (5) nicht bedeckt sind durch ein Verfahren der Entmetallisierung,
Aussetzen der entmetallisierten Bereiche der zweiten Schicht (3) in Licht oder Strahlung, um das strahlungsempfindliche Polymer in den entmetallisierten Bereichen in einen löslichen Zustand zu überführen und das lösliche strahlungsempfindliche Polymer zu entfernen,
Entfernen des Metalls in Bereichen der ersten Metallschicht (41), die nicht durch die zweite Schicht (3) bedeckt sind, durch einen Prozess der Entmetallisierung.

2. Verfahren nach Anspruch 1, wobei die Materialien, die für die erste Schicht (2) und für die zweite Schicht (3) verwendet sind, prägbare Materialien sind, und wobei die erste (21) und die zweite holographische Oberflächenstruktur (32) durch Prägen der entsprechenden Schicht (2, 3) gemacht sind.

3. Verfahren nach Anspruch 1 oder 2, wobei die erste Schicht (2) auf einen transparenten Film (1) gedruckt wird, das strahlungsempfindliche Polymer auf die erste Metallschicht (41) gedruckt wird und die Beschichtung (5) ein Schutzlack ist, der in einem vorbestimmten Muster auf die zweite Metallschicht (42) gedruckt wird.

4. Verfahren nach einem der vorhergehenden Ansprüche 1 bis 3, wobei die Strahlung UV-Licht ist, das auf das Sicherheitselement nach dem Entmetallisierungsschritt der zweiten Metallschicht (42) aufgebracht wird.

5. Verfahren nach einem der vorhergehenden Ansprüche 1 bis 4, wobei das strahlungsempfindliche Polymer durch UV-Licht destabilisiert wird und das destabilisierte Polymer in einer wässrigen Natronlösung löslich ist.

6. Verfahren nach einem der vorhergehenden Ansprüche 1 bis 5, wobei eine Schutzschicht (6) aufgebracht wird, um das Sicherheitselement abzudecken, wobei die Schutzschicht (6) aufgebracht wird, um die freiliegenden Oberflächen der Schichten (2, 5) abzudecken und Lücken (9) zu füllen, die in den Schichten (2, 3, 41, 42, 5) ausgebildet sind, insbesondere die Lücken (9), die durch die transparenten Bereiche der Muster gebildet sind.

7. Verfahren nach einem der vorhergehenden Ansprüche 1 bis 6, wobei die Schutzschicht (6) mit einem Kleber, insbesondere einem Thermokleber, versehen ist.

## Revendications

1. Procédé de fabrication d'un élément de sécurité, ledit procédé comprenant les étapes de :
formation d'une première couche (2) à partir d'un matériau transparent,
formation d'une structure de surface holographique (21) sur la première couche (2),
métallisation de la première couche (2) pour former une première couche de métal (41),
formation d'une deuxième couche (3) à partir d'un polymère sensible au rayonnement sur la première couche de métal,
formation d'une structure de surface holographique (32) sur la deuxième couche (3),
métallisation de la deuxième couche (3) pour former la deuxième couche de métal (42),
formation d'un motif de revêtement (5) sur la deuxième couche de métal (42), ledit motif comprenant des régions couvertes par le revêtement (5) et des régions découvertes par le revêtement (5),
élimination du métal dans les régions de la deuxième couche de métal (42), qui ne sont pas couvertes par le revêtement (5), par un procédé de dé-métallisation,
exposition des régions dé-métallisées de la deuxième couche (3) à la lumière ou au rayonnement de manière à faire passer le polymère sensible au rayonnement dans les régions dé-métallisées dans un état soluble et élimination du polymère soluble sensible au rayonnement,
élimination du métal dans les régions de la première couche de métal (41), qui ne sont pas couvertes par la deuxième couche (3), par un procédé de dé-métallisation.

2. Procédé selon la revendication 1, dans lequel les matériaux utilisés pour la première couche (2) et pour la deuxième couche (3) sont des matériaux emboutissables et dans lequel les premières (21) et les deuxièmes (32) structures de surface holographiques sont fabriquées par emboutissage de la couche respective (2, 3).

3. Procédé selon la revendication 1 ou 2, dans lequel la première couche (2) est imprimée sur un film transparent (1), le polymère sensible au rayonnement est imprimé sur la première couche de métal (41) et le revêtement (5) est un vernis épargne, qui est imprimé en un motif prédéterminé sur la deuxième couche de métal (42).

4. Procédé selon l'une quelconque des revendications précédentes 1 à 3, dans lequel le rayonnement est la lumière UV qui est appliquée à l'élément de sécurité après l'étape de dé-métallisation de la deuxième couche de métal (42).

5. Procédé selon l'une quelconque des revendications précédentes 1 à 4, dans lequel le polymère sensible au rayonnement est déstabilisé par la lumière UV et le polymère déstabilisé est soluble dans une solution aqueuse de soude.

6. Procédé selon l'une quelconque des revendications précédentes 1 à 5, dans lequel une couche protectrice (6) est appliquée pour recouvrir l'élément de sécurité, la couche protectrice (6) étant appliquée pour recouvrir les surfaces exposées des couches (2, 5) et pour combler les vides (9) formés dans les couches (2, 3, 41, 42, 5), particulièrement les vides (9) formés par les régions transparentes des motifs.

7. Procédé selon l'une quelconque des revendications précédentes 1 à 6, dans lequel la couche protectrice (6) est dotée d'un adhésif, en particulier un thermo-adhésif.
